# EUROPEAN PATENT APPLICATION

(11) **EP 2 492 374 A1**
(43) Date of publication of application: **29.08.2012**
(21) Application number: 10824830.3
(22) Date of filing: 13.10.2010
(51) Int. Cl.: C25B 1/04, H01L 31/042, H02J 7/35

(54) **LARGE-SCALE OCEAN MOBILE SOLAR POWER GENERATION SYSTEM**

(30) Priority: 22.10.2009 JP 2009243359
(71) Applicant: Chuo University, Tokyo 192-0393 (JP)
(72) Inventor: KOKUSHO Takaji, Tokyo 112-8551 (JP)
(74) Representative: von Hirschhausen, Helge
(86) International application number: PCT/JP2010/067908
(87) International publication number: WO 2011/048981

(57) **Abstract**

Provided is a solar power generation system capable of efficiently transporting energy generated at a distant location and converting the energy into electric energy. A solar power generation system (100) is configured to be provided with: a solar cell raft (5) which floats on the sea while being equipped with a solar cell unit (20) formed by connecting a plurality of solar cells (21) in the shape of a sheet on a floating body (23) ; a solar cell raft mother vessel (4) which is equipped with a seawater electrolysis device (57) for converting electric energy generated by the solar cell unit (20) into hydrogen and a liquid hydrogen tank (59) for storing the hydrogen obtained by the conversion, and can convey or tow the solar cell raft (5); a recovery vessel (6) which is equipped with a hydrogen recovery/storage means for recovering the hydrogen stored in the liquid hydrogen tank (59); a hydrogen recovery tank (9) which recovers the hydrogen from the recovery vessel (6) and stores the hydrogen; and a power plant (10) which converts the hydrogen stored in the hydrogen recovery tank (9) into electric energy.

## Description

### TECHNICAL FIELD

The present invention relates to a solar power generation system, and more particularly, to a solar power generation system capable of efficiently transporting solar energy obtained from a large-area solar cell raft that floats on the sea to convert the solar energy into electric power or to allow vehicles and the like to use the solar energy.

### BACKGROUND ART

The concentration of carbon dioxide (CO₂: a greenhouse effect gas)in the atmosphere has rapidly increased due to various activities of the human beings accompanying the use of fossil fuels during a short-term period of the past 100 years. As a result, the phenomena such as many abnormal climates and an increase in the sea level due to melting of icebergs have been happened. Therefore, many scientists have predicted the environmental changes if the phenomena are unsettled, and thus have suggested that some countermeasures have to be taken globally. That is, many scientists have insisted that the fossil fuels should not be used and the fossil fuel energies are substituted by clean alternative energies. Further, the nuclear energy has been evaluated as one of the alternative energies after the development of the nuclear power. However, the nuclear energy may not be the energy on which human beings can depend, considering the amount of uranium resource and disposal or safety of the used nuclear fuel. The clean energy is energy that causes no air-polluting substances. For example, air-polluting substances should not be generated in the process of energy conversion that is carried out using wind power, solar heat, sunlight, and the like.

Accordingly, a conversion efficiency of solar cells that convert sunlight into electric energy has recently improved and thus the solar cells have been put to practical use in general households as well. Further, some companies have installed middle-sized solar cells to supplement a part of necessary power for their factories. However, this tendency is effective in terms of educating our societies with respect to clean energy, but does not sufficiently impact on the substitution of the currently used energy with the clean energy. Solar energy is the clean energy, but has the problems that a large area is necessary to accumulate energy due to low energy density and it is difficult to gain a reliable output due to a considerable temporal variation.
As a conventional technique regarding the clean energy, Patent Literature 1 discloses pressurization, transmission, and supply facility that pressurizes and transmits an electrolytic hydrogen gas electrolyzed and extracted by solar generation power to a remote location.
Further, Non-patent Literature 1 discloses the present states and the future prospects of solar energy. The solar generation has no practical problems in terms of techniques, and thus has been spread mainly in the housing field. Non-patent Literature 1 suggests that the solar generation should be spread to non-housing fields such as public and industry sectors.

### CITATION LIST

### PATENT LITERATURE

Patent Literature 1: Japanese Patent Application Laid-Open Publication No. 10-205700
Non-Patent Literature 1: "Ocean energy development technology in the 21st century" published in January 2006 in Ocean Construction Engineers Committee of Japan Ocean Development Construction Association Inc. by Sankaido Publishing Co., Ltd.

### SUMMARY OF THE INVENTION

### PROBLEM TO BE SOLVED BY THE INVENTION

However, the conventional technique disclosed in Patent Literature 1 has a problem in that a use efficiency of an apparatus is low since the apparatus uses the power generated by a solar power generation apparatus installed on the ground (desert) and the duration of sunlight is limited. There is a further problem in that the generated power does not increase since the installation area of a solar generation apparatus is limited. Furthermore, there is a problem in that facilities that supply a large amount of water have to be installed in order to supply and electrolyze water.
Further, the conventional technique disclosed in Non-Patent Literature 1 relates to a solar power generation facility fixedly installed on the ground or the sea along with a wind-power generation facility. That is, a solar power generation facility is just an auxiliary facility in a large capacity power plant in the current situation.
The present invention is devised in view of the above-mentioned problems and an object of the invention is to provide a solar power generation system in which a lot of solar cell units are transported to a clear region of the sea determined on the basis of weather information sent from weather satellites and a plurality of solar cell rafts of a large area are constructed, hydrogen extracted by electrolyzing seawater using a large amount of power obtained from the solar cell rafts is recovered or the obtained electric energy is directly stored in a novel storage battery, and the energy generated at the remote location is efficiently transported so as to be used as electric energy. Thus, it is possible to realize a large-scale power generation system that closely matches a nuclear power plant in capacity and overcomes the problems with the conventional system using natural energy, such as low output and considerable temporal variation.

### MEANS FOR SOLVING PROBLEM

In order to solve the problem, a solar power generation system according to claim 1 includes: a solar cell raft which floats on the sea and includes a floating body on which a solar cell unit is mounted, the solar cell unit being formed by connecting a plurality of solar cells in a sheet form; a solar cell raft mother vessel which is equipped with an electricity-hydrogen conversion unit configured to convert electric energy generated by the solar cell unit into hydrogen and with a hydrogen storage unit configured to store the converted hydrogen, the solar cell raft mother vessel being capable of transporting the solar cell raft; a recovery vessel which mounts a hydrogen recovery/storage unit configured to recover the hydrogen stored in the hydrogen storage unit; a hydrogen recovery tank configured to recover the hydrogen from the recovery vessel and store the recovered hydrogen; and an energy conversion unit configured to convert the hydrogen stored in the hydrogen recovery tank into electric energy or to directly use the hydrogen stored in the hydrogen recovery tank.
A solar cell uses a semiconductor (for example, silicon) as a conversion device to directly convert solar energy into electric energy. Therefore, the single solar cell cannot be formed on a large scale. In the specification, an element formed in the shape of a sheet by connecting solar cells is referred to as a solar cell unit and an element formed by mounting the solar cell unit on a floating body which floats on the sea is referred to as a solar cell raft. The solar cell unit on the solar cell raft receives sunlight and generates electric energy while floating on the sea. The generated electric energy is unnecessarily consumed when the electric energy is not used. Therefore, an electricity-hydrogen conversion unit equipped in a solar cell raft mother vessel converts the seawater into hydrogen using the electric energy. That is, the sunlight is converted into the electric energy, and then the electric energy is used as the power for the electrolysis through which the seawater is converted into the hydrogen. The converted hydrogen is stored in a tank to be recovered by a recovery vessel and then is converted into electric energy or directly used. Further, the hydrogen is preferably pressurized and stored as liquefied hydrogen so that the hydrogen can be efficiently stored. Since methanol is in a liquid phase at normal temperature and normal pressure, it does not require a heat insulation countermeasure. Accordingly, it may be converted into methanol for storage. Thus, it is possible to efficiently and inexpensively realize long-distance transportation of the solar energy obtained on the sea close to the equator where the duration of sunlight is long.

A solar power generation system according to claim 2 includes a solar cell raft which floats on the sea and includes a floating body on which a solar cell unit is mounted, the solar cell unit being formed by connecting a plurality of solar cells in a sheet form; a solar cell raft mother vessel which is equipped with an electric storage unit configured to store electric energy generated by the solar cell unit and which is able to transport the solar cell raft; a storage battery tanker which recovers the electric energy stored in the electric storage unit; and a power conversion terminal which recovers the electric energy stored in the electric battery tanker and converts the electric energy into predetermined power.
According to the invention, the electric energy generated by the solar cell unit is directly stored in the electric storage unit (for example, a storage battery and the like). The electric energy is recovered by each storage battery tanker and is converted into a predetermined power for use. Thus, since it is not necessary to use a conversion unit for converting the electric energy into another type of energy, the electric energy can be efficiently stored.
According to claim 3, a solar cell raft group is constructed by connecting the solar cells and the floating bodies that constitute a plurality of the solar cell rafts, respectively.
In many cases, the solar cell rafts are exposed to severe environments caused by waves or wind. In this case, when the solar cell rafts are separately disposed, there is a concern that the solar cell rafts may drift or collide with each other and the solar cells are thus damaged. Accordingly, in the invention, a solar cell raft group is constructed by connecting the solar cells and the floating bodies of the plurality of solar cell rafts. Thus, it is possible to reduce the influence of the waves or the wind, thereby enabling the surfaces of the solar cells to be stably directed in the direction of the sun.

According to claim 4, a plurality of elevating units mounted on the floating bodies and configured to independently lift and lower the solar cell units to appropriate positions, wherein a surface angle of the solar cell unit is changeable by independently controlling the respective elevating units.
The surface angle of the solar cell unit group needs to be changed in accordance with the angle of the sunlight in order to efficiently receive the sunlight with change in the duration of the sunlight. Accordingly, the invention provides the plurality of elevating units for independently lifting and lowering the solar cell unit to an appropriate position. The surface angle of the solar cell unit group is adjusted by independently controlling the elevating means. Thus, the solar cell unit group can efficiently receive the sunlight. Further, the solar cell unit also functions as a sail when the solar cell raft group is sailed using wind. Therefore, this function is considered when the surface angle of the solar cell unit group is adjusted.

According to claim 5, the floating body includes a stretchable and hollow floating body main section which mounts the solar cell unit therein and a stretchable and hollow semi-submerged tank submerges the floating body in the sea to stabilize the floating body and wherein a specific weight of the semi-submerged tank is set such that the floating body main section floats from the sea surface to a predetermined extent.
In order to enable the solar cell raft to stably float and efficiently sail on the sea, the structure of the floating body has to be designed to minimize the influence of, particularly, waves. Further, since it is necessary to convey the floating body to a remote location of the sea, the floating body has to be designed to be stored in the solar cell raft mother vessel. In the invention, accordingly, the floating body includes the stretchable and hollow floating body main section and the stretchable and hollow semi-submerged tank stabilizing the floating body submerged in the sea. Thus, when the floating body is transported, the floating body can be contracted and stored by pumping the air or the seawater out of the hollow portion and the weighted center of the floating body is lowered by the semi-submerged tank so as to minimize the influence of the waves.

According to claim 6, the plurality of solar cells of the solar cell unit are configured to be connected to each other in a strip shape and be wound around a roller (strip-shaped solar cell group).
At the present time, the flexible solar cell with high endurance is commercially available. For example, a copper indium gallium diselenide (CIGS) solar cell can reliably be used for a long period of time. Accordingly, the plurality of flexible solar cells of the solar cell unit are connected to each other in a strip shape or a plate shape, and thus the strip-shaped solar cell group can be wound and stored around the roller. Thus, the long strip-shaped solar cell can be stored simply without taking up a space for the solar cells.

According to claim 7, the plurality of solar cells of the solar cell unit are configured to be connected to each other in a plate shape and be folded in a folding screen shape (plate-shaped solar cell group).
The solar cells with no flexibility are configured in a plate shape in a unit of the plurality of solar cells. The plate-shaped solar cells are connected to each other to form plate-shaped solar cells and to be received by folding the plate-shaped solar cells at their boundaries thereof. Thus, since the solar cells can be used at lower cost compared to using the flexible solar cells, the cost of the solar cell unit can be reduced.

According to claim 8, the solar cell raft mother vessel includes a control device configured to control the elevating unit, a conversion device configured to convert energy generated by the solar cell unit, and a reception unit configured to receive the solar cell raft. The control device includes a communication unit configured to communicate with a weather satellite and/or a GPS satellite, a weather information reception unit configured to receive weather information transmitted from the weather satellite, a GPS reception unit configured to acquire position information, which is acquired based on a signal from the GPS satellite with regard to the solar cell raft mother vessel, a solar position calculation unit configured to calculate a position of the sun based on the weather information received by the weather information receiving unit, a sail schedule calculation unit configured to calculate a long-term sail schedule based on the weather information received by the weather information receiving unit, and a solar cell angle control unit configured to control the elevating unit based on the position of the sun calculated by the solar position calculation unit, a wind direction, a wind speed, and the sail schedule. The conversion device includes a seawater electrolysis device configured to electrolyze seawater by power generated by the solar cell unit, a hydrogen liquefying device configured to liquefy the hydrogen extracted by the seawater electrolysis device, and a liquefied hydrogen tank configured to store the liquefied hydrogen.
The solar cell raft mother vessel stands by near the solar cell raft and is connected to the solar cell unit group via the cable. The solar cell raft mother vessel electrolyzes the seawater using the power generated by the solar cell unit group to extract hydrogen. Further, the solar cell raft mother vessel confirms the position of the sun or the position of the solar cell raft mother vessel based on the information from the weather satellite and the GPS satellite, moves to the location for receiving the solar energy most efficiently by a sail schedule based on long-term weather prediction, and controls the surface angle of the solar cell unit group. Such control is carried out by a computer and the solar cell raft mother vessel tracks the sun in real time and moves the solar cell raft so that the solar cell unit receives the sunlight as much as possible. In order to minimize the energy necessary in the movement, the solar cell raft mother vessel detects the wind speed and the wind direction and performs control such that the surface angle of the solar cell unit is optimum for the movement direction. Thus, the solar energy can efficiently be converted into another energy and can be stored.

According to claim 9, the solar cell raft mother vessel includes a control device configured to control the elevating unit, an electric storage device configured to store energy generated by the solar cell units, and a storing unit configured to store the solar cell raft. The control device includes a communication unit configured to communicate with a weather satellite and/or a GPS satellite, a weather information reception unit configured to receive weather information transmitted from the weather satellite, a GPS reception unit configured to acquire position information regarding the solar cell raft mother vessel, the position information being acquired based on a signal from the GPS satellite, a solar position calculation unit configured to calculate a position of the sun based on the weather information received by the weather information receiving unit, a sail schedule calculation unit configured to calculate a long-term sail schedule based on the weather information received by the weather information receiving unit, and a solar cell angle control unit configured to control the elevating unit based on the position of the sun calculated by the solar position calculation unit, a wind direction, a wind speed, and the sail schedule. The electric storage device includes a battery unit configured to store the power, and a charge/discharge device configured to charge the battery unit with the power generated by the solar cell unit and to discharge the power from the battery unit.
According to the invention, the electric storage device is provided instead of the conversion device. The electric storage device includes the large-capacity battery unit and the charge/discharge device charging the battery unit or outputting power. The other configuration is the same as that of claim 8. Thus, the solar energy can be stored more efficiently.
According to claim 10, the solar cell unit is used as a sail for moving the solar cell raft mother vessel by wind power.
The clean energy is efficiently used where the wind power is used to minimize the energy when the solar cell raft mother vessel is moved. Since the plurality of solar cells are formed in a sheet shape in the solar cell unit group, the solar cell unit group can function as one sail by adjusting the angle of the solar cell unit by the elevating means. Thus, it is possible to reduce the energy necessary in the movement of the solar cell raft mother vessel.

### EFFECT OF THE INVENTION

According to the invention, the sunlight is converted into electric energy and the electric energy is used as power for electrolysis to thereby generate hydrogen. The converted hydrogen is stored in the tank and is recovered by the recovery vessel. The hydrogen thus recovered is converted into electric energy or is directly used. Accordingly, it is possible to efficiently and inexpensively transport over a long distance the solar energy obtained on the sea close to the equator where the duration of sunlight is long.
The electric energy generated by the solar cell unit is stored directly in the electric storage means (for example, a storage battery and the like), and the electric energy is recovered with each storage battery tanker and converted into a predetermined power to be used. Accordingly a conversion unit for converting the electric energy is not necessary and the electric energy can be efficiently stored.
The solar cell raft group is constructed by connecting the solar cells and the floating bodies where a solar cell and a floating body constitute a solar cell raft. Thus, it is possible to reduce the influence of the waves or the wind so that the surfaces of the solar cells are enabled to face the sun reliably.
Since the plurality of elevating units which independently lift and lower the solar cell units to appropriate positions are provided, and each elevating unit is individually controlled to adjust the surface angle, the sunlight can be efficiently collected by the solar cell unit and thus can be used for sailing.
The floating body includes the stretchable and hollow floating body main section and the stretchable and hollow semi-submerged tank which submerges the floating body to be stabilized in the sea. Thus, when the floating body is transported, the air or the seawater is pumped out of the hollow portion of the floating body so that it can be stored with its body size reduced. In addition, the weighted center of the floating body is lowered by the semi-submerged tank so that the influence of the waves can be minimized.
The plurality of flexible solar cells which constitutes a solar cell unit are connected to form a strip shape, and thus the strip-shaped solar cell group can be stored as wound around the roller. Thus, the long strip-shaped solar cell group can be stored simply without taking a large space.

The solar cells with no flexibility are configured to form a plate shape in units of the plurality of solar cells. The plate-shaped solar cells are connected to each other to form a plate-shaped solar cell group and the plate-shaped solar cells are stored as folded at their boundaries. Thus, since the solar cells can be used at lower cost compared to the flexible solar cells, the cost of the solar cell unit can be reduced.
The solar cell raft mother vessel electrolyzes the seawater using the power generated by the solar cell unit group to produce hydrogen. The solar cell raft mother vessel checks the position of the sun or the position of the solar cell raft mother vessel based on the information from the weather satellite and the GPS satellite, moves to the location where the solar energy can be most efficiently obtained according to sail schedule determined based on long-term weather prediction, and controls the surface angle of the solar cell unit group. In order to minimize the consumption of the energy for its movement, the solar cell raft mother vessel detects the wind power and the wind direction and performs control such that the surface angle of the solar cell unit group becomes optimum relative to the movement direction. Thus, the solar energy can be efficiently converted into another type of energy to be stored.
The electric storage device includes the large-capacity battery unit and the charge/discharge device which charges the battery unit or outputs power. Thus, the solar energy can be more efficiently stored.
Since the solar cell unit group includes the plurality of solar cells and has a sheet shape, each solar cell unit group can serve as a sail. With this configuration, the energy necessary for movement of the solar cell raft mother vessel can be reduced.

### BRIEF DESCRIPTION OF DRAWINGS

Fig. 1 is a diagram schematically illustrating the overview of a solar power generation system according to an embodiment of the invention.
Fig. 2 is a diagram illustrating the configuration of a solar cell raft according to the invention, Fig. 2 (a) is a top view illustrating the solar cell raft, Fig. 2 (b) is a side view illustrating the solar cell raft partially submerged in the sea, Fig. 2 (c) is a partially expanded view illustrating a solar cell unit, and Fig. 2(d) is a side view illustrating a solar cell raft according to another embodiment.
FIG. 3 is a diagram illustrating adjustments of a surface angle of the solar cell unit, Fig. 3 (a) is a diagram illustrating a case where the sun is located in the east, Fig. 3 (b) is a diagram illustrating a case where the sun passes through the culmination, and Fig. 3(c) is a diagram illustrating a case where the sun is located in the west.
Fig. 4 is a diagram illustrating the solar cell unit which is stored in a solar cell raft mother vessel, Fig. 4(a) is a diagram illustrating the solar cell unit which is stored in a winding manner, and Fig. 4(b) is a diagram illustrating the solar cell unit which is stored in a folding manner.
Fig. 5 is a diagram illustrating the configuration of the solar cell raft mother vessel according to the invention.
Fig. 6 (a) is a functional block diagram illustrating the details of a control device described in Fig. 5, Fig. 6(b) is a functional block diagram illustrating the details of a conversion device described in Fig. 5, and Fig. 6(c) is a functional block diagram illustrating the details of an electric storage device described in Fig. 5.
Fig. 7 is a flowchart illustrating an operation course of the solar cell raft mother vessel of the solar power generation system according to the invention.
Fig. 8 is a flowchart illustrating steps of installing the floating body on the sea.
Fig. 9 is a flowchart illustrating an operation course of a recovery vessel of the solar power generation system according to the invention.
Fig. 10 is a flowchart illustrating an operation course of a storage battery tanker of the solar power generation system according to the invention.

### BEST MODES FOR CARRYING OUT THE INVENTION

Hereinafter, embodiments of the present invention will be described in detail with reference to the drawings. The constituent elements, kinds, combinations, shapes, relative positions thereof, and the like described in the embodiments are not construed as limiting to the scope of the invention, but are just simply described examples.

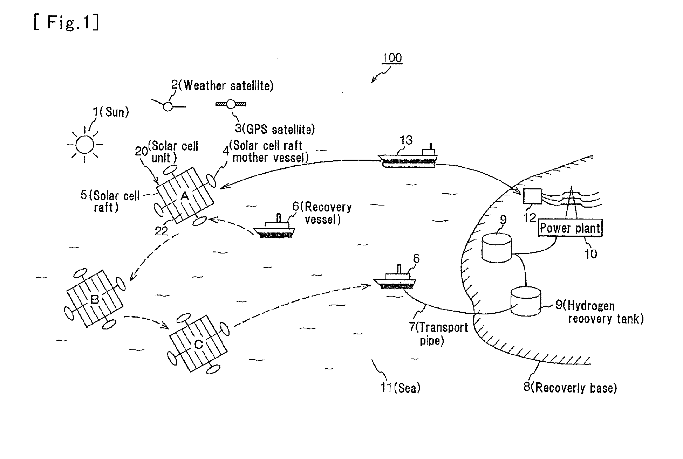

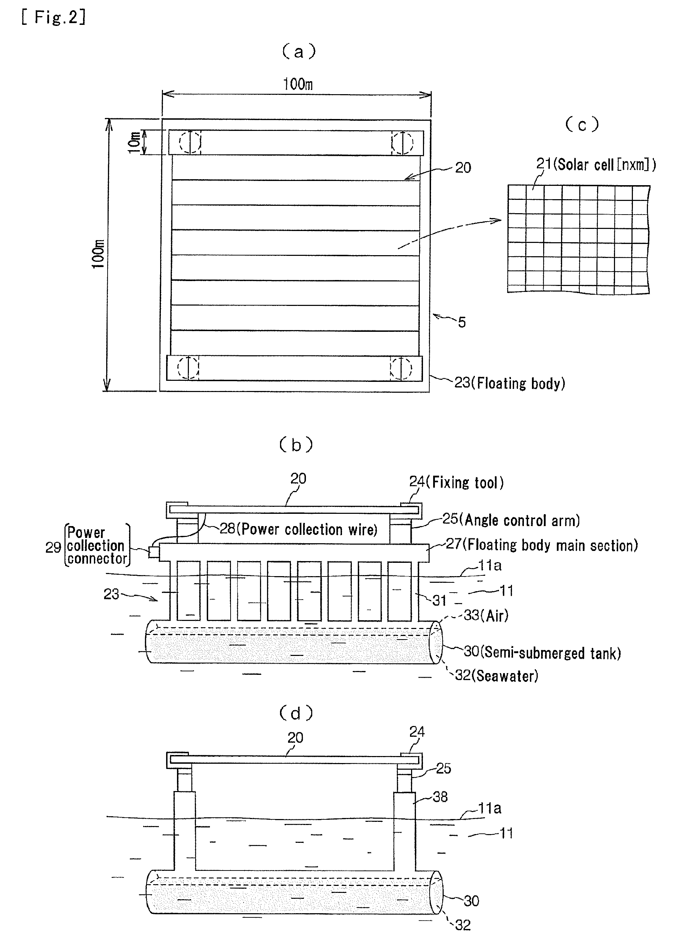

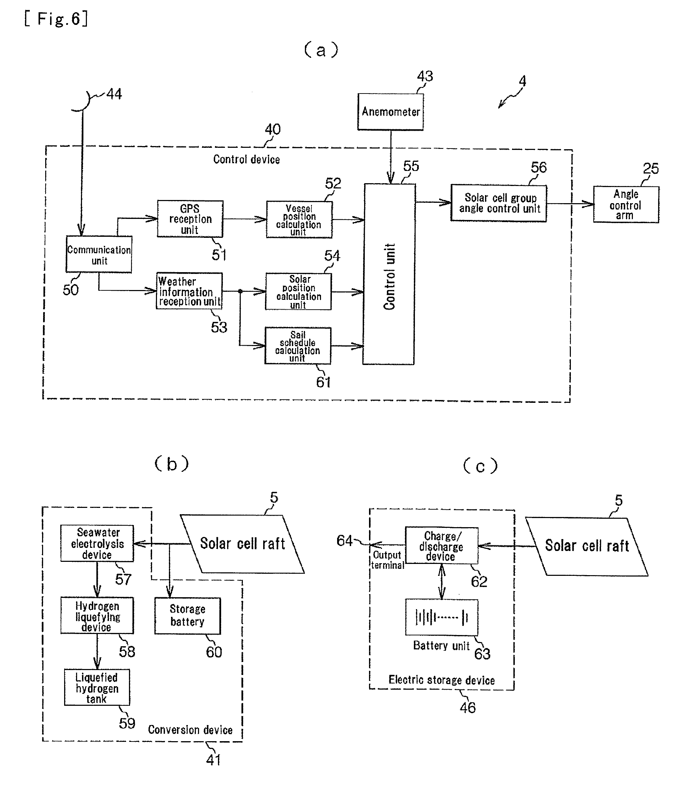

Fig. 1 is a diagram schematically illustrating the overview of a solar power generation system according to an embodiment of the invention.
Reference numeral 1 denotes the sun, reference numeral 2 denotes a weather satellite, and reference numeral 3 denotes a GPS satellite.
A solar power generation system 100 includes a solar cell raft 5 which floats on the sea and includes a solar cell unit 20 (see Fig. 2) which is formed by connecting a plurality of solar cells 21 (see Fig. 2) in a sheet form and is mounted on a floating body 23 (see Fig. 2) ; a solar cell raft mother vessel 4 which is equipped with a seawater electrolysis device (electricity-hydrogen conversion unit) 57 (see Fig. 6) converting the electric energy generated by the solar cell unit 20 into hydrogen and a liquefied hydrogen tank (hydrogen storage unit) 59 (see Fig. 6) storing the converted hydrogen and which can convey or tow the solar cell raft 5; a recovery vessel 6 which mounts hydrogen recovery/storage unit for recovering the hydrogen stored in the liquefied hydrogen tank 59; a hydrogen recovery tank 9 which recovers the hydrogen from the recovery vessel 6 and stores the recovered hydrogen; and a power plant (energy conversion unit) 10 which converts the hydrogen stored in the hydrogen recovery tank 9 into electric energy.
In the example shown in Fig. 1, the solar cell raft 5 includes three solar cell rafts A, B, and C. Four solar cell raft mother vessels 4 are connected to each of the solar cell rafts A, B, and C, but this configuration is just an example. The number of solar cell rafts and the number of solar cell raft mother vessels 4 may be modified variously. A solar cell raft group including a large-area solar cell unit is constructed by connecting the solar cells and the floating bodies 23 constituting the plurality of solar cell rafts, respectively. In addition, the recovery vessel 6 recovers the hydrogen stored in the each solar cell raft mother vessel 4 in the order of the solar cell rafts A, B, and C. Further, apart from the solar cell raft mother vessel 4, a conveyance vessel receiving and conveying only the solar cell raft 5 may be further provided. In this case, each solar cell raft mother vessel 4 includes a control device 40 and a conversion device 41, respectively. Further, the solar cell raft mother vessel 4 may include only an electric storage device 46. In this case, provided are the recovery vessel 6 recovering only the hydrogen and a storage battery tanker 13 recovering only the electric energy. Further, the solar cell raft mother vessel 4 is provided with two types, one is equipped with the conversion device 41 to store the hydrogen and the other is equipped with the electric storage device 46 to store the electric energy.

Next, the general operation of the solar power generation system 100 according to the invention will be described. In Fig. 1, a type of solar power generation system will be described which electrolyze seawater and converts the seawater into hydrogen. The vessel group of the solar cell raft mother vessels 4 moves from a recovery base 8 to a target sea area to convey the solar cell rafts 5 of which each solar cell raft mother vessel 4 is in charge. When the solar cell raft mother vessels 4 move, the solar cell raft mother vessels 4 confirms the weather conditions of the target sea area in advance based on weather information obtained from the weather satellite 2. The positions of each vessel group are controlled up to the target sea area, where each vessel group is anchored, based on the position information obtained from the GPS satellite 3. Each vessel group arrived in the target sea area puts the floating body 23 of the solar cell raft 5 from the solar raft mother vessels 4. For example, the floating body 23 is expanded by compressed air like a bladder with a hollow inside (which will be described in detail). Then, the solar cell unit 20 wound and stored by, for example, a roller is withdrawn and installed on the floating body 23 installed in this way. The solar cell units 20 are connected to each other by cables and the entire surfaces of the floating body 23 are paved with the solar cells. The solar cell unit 20 has a square with horizontal and vertical sizes of, for example, 100 m x 100 m.
When the respective solar cell rafts A, B, and C are complete, the angles are adjusted from the solar cell raft mother vessel 4 so that the solar cell surfaces face the azimuth of the sun 1. Then, each solar cell raft 5 converts the solar energy into electric energy and seawater is electrolyzed using the power to extract hydrogen in the solar cell raft mother vessel 4. The extracted hydrogen is liquefied and stored in a tank. Further, since the angle of the sun 1 varies with the rotation of the earth, the angle of the solar cell unit 20 is adjusted so as to match the angle of sunlight by calculating the position of the sun in real time and the solar cell raft mother vessel 4 is controlled to move and track the sunlight as far as possible.

On the other hand, when the recovery vessel (group) 6 standing by at the recovery base 8 is informed of a message that the tank in the solar cell raft mother vessel 4 is full with the hydrogen, the recovery vessel 6 leaves the recovery base 8 and moves to the sea area where the solar cell raft mother vessel 4 waits. When the recovery vessel 6 arrives in the sea area, the recovery vessel 6 recovers the hydrogen from each solar cell raft mother vessel 4 and returns to the recovery base 8. A transport pipe 7 is installed off the coast of the recovery base 8, and thus the hydrogen stored in the recovery vessel 6 is transported from the transport pipe 7 to the hydrogen recovery tank 9. Further, the recovery vessel 6 may call at the port of the recovery base 8 without using the transport pipe 7 and the hydrogen may be recovered directly from the recovery vessel 6 to the hydrogen recovery tank 9. At the recovery base 8, the hydrogen stored in the hydrogen recovery tank 9 is subjected to electrochemical reaction with oxygen to generate electricity by, for example, a fuel cell equipped in the power plant 10.
That is, the solar cell 21 uses a semiconductor (for example, silicon) as a conversion element in order to directly convert the solar energy into electric energy. Therefore, a single solar cell may not be formed on a very large scale. For this reason, the solar cell unit 20 is formed by connecting the solar cells to each other in a sheet form and the solar cell raft 5 mounting the solar cell unit 20 on the floating body 23 is made to float on the sea. The solar cell raft 5 receives the sunlight to generate the electric energy while floating on the sea. The generated electric energy is unnecessarily consumed when the electric energy is not used. Therefore, the seawater is electrolyzed and converted into hydrogen using the electric energy by a water electrolysis device 57 equipped in the solar cell raft mother vessel 4 connected to the solar cell raft 5. That is, the sunlight is converted into the electric energy by the solar cell, and then the seawater is electrolyzed to be converted into the hydrogen using the electric energy. The converted hydrogen is stored in the tank on the solar cell raft mother vessel 4, and then is recovered by the recovery vessel 6. The hydrogen stored in the hydrogen recovery tank 9 is subjected to electrochemical reaction with oxygen to generate electric energy by, for example, the large-scale fuel cell. Further, in order to efficiently store the hydrogen, the hydrogen is preferably pressurized so as to be stored as liquefied hydrogen. Since methanol is in a liquid phase at normal temperature and at normal pressure and does not require a heat insulation countermeasure, the hydrogen may be converted into methanol for storage. Accordingly, it is possible to efficiently and inexpensively realize long-distance transportation of the solar energy obtained on the sea close to the equator where the duration of sunlight is long.

Fig. 2 is a diagram illustrating the configuration of the solar cell raft according to the invention. Fig. 2 (a) is a top view illustrating the solar cell raft, Fig. 2 (b) is a side view illustrating the solar cell raft partially submerged in the sea, Fig. 2 (c) is a partially enlarged view illustrating a solar cell unit, and Fig. 2(d) is a side view illustrating a solar cell raft according to another embodiment. Here, an element formed by connecting the plurality of solar cells 21 is referred to as the solar cell unit 20 and an element formed by mounting the solar cell unit 20 on the floating body 23 is referred to as the solar cell raft 5.
In this example, the solar cell unit 20 is configured to have a square with each side of 100 m and the area of the solar cell unit 20 is set to 10, 000 square meters. Further, the solar cell unit 20 is configured to be divided into strip-shaped bands of which a shorter side has a width of 10 m. Therefore, since it is easy to compactly wind or fold the solar cell unit 20 in a roll form, the solar cell unit 20 can easily be stored in the solar cell raft mother vessel.

The floating body 23 includes a stretchable and hollow floating body main section 27 that mounts the solar cell unit 20 and a stretchable and hollow semi-submerged tank 30 that is submerged in the sea 11 to stabilize the floating body 23. The specific weight of the semi-submerged tank 30 is set such that the floating body main section 27 floats from a sea surface 11a to a predetermined extent. Plural angle control arms (elevating unit) 25 are mounted on the floating body 23 and independently lift and lower the appropriate positions (in this example, four corners) of the solar cell unit 20. Fixing tools 24 fix the solar cell unit 20 to the floating body 23. The angle of a light-receiving surface of the solar cell unit 20 is configured to be changed by independently controlling the angle control arms 25. In the floating body main section 27, a power collection wire 28 collects the power generated by the solar cell unit 20 and supplies the power to the solar cell raft mother vessel 4 through a power collection connector 29. A unit for using hydraulic pressure, pneumatic pressure, and the like is used as the angle control arm 25.
Further, the floating body main section 27 and the semi-submerged tank 30 communicate with each other through communication pipes 31. The floating body main section 27 and the semi-submerged tank 30 are integrally formed, so that seawater 32 and the like can be supplied through the communication pipes 31 to adjust the specific weight of the semi-submerged tank 30. That is, the amount of seawater 32 is adjusted so that the floating body main section 27 floats from the sea surface 11a to the predetermined extent by the weight and buoyancy of the entire floating body.

In order to stably float and efficiently sail the solar cell raft 5 on the sea, the structure of the floating body 23 has to be designed to minimize the influence of, particularly, waves. Further, since it is necessary to convey the floating body 23 to a remote location of the sea, the floating body 23 is compactly designed so as to be stored in the solar cell raft mother vessel 4. In this embodiment, accordingly, the floating body 23 includes the stretchable and hollow floating body main section 27 and the stretchable and hollow semi-submerged tank 30 stabilizing the floating body 23 submerged in the sea 11. Thus, when the floating body 23 is conveyed, the floating body 23 can be contracted and stored by extracting the air or the seawater in the hollow portion and the weighted center of the floating body 23 is lowered by the semi-submerged tank 30 so as to minimize the influence of the waves.
In addition, as shown in Fig. 2(d), pillars 38 may be directly erected from the semi-submerged tank 30 and the angle control arms 25 may be provided at the front ends of the pillars 38 without the floating body main section 27.

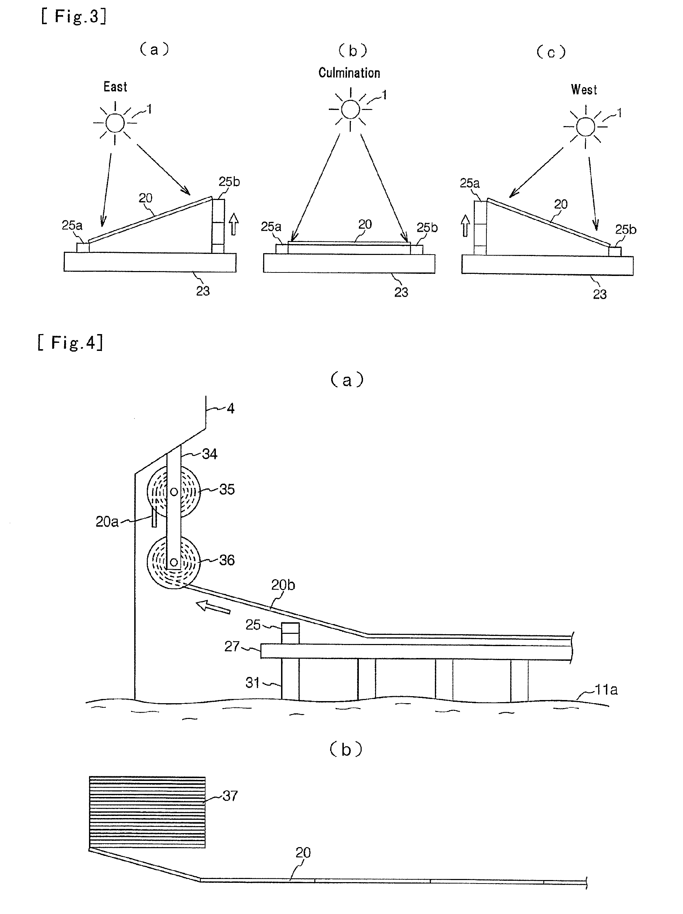

Fig. 3 is a diagram illustrating the forms of adjustment of an angle of light-receiving surface of the solar cell unit. Fig. 3(a) is a diagram illustrating a case where the sun is located in the east, Fig. 3 (b) is a diagram illustrating a case where the sun passes through the culmination, and Fig. 3 (c) is a diagram illustrating a case where the sun is located in the west. When the sun 1 is located in the east as shown in Fig. 3 (a), a pair of adjacent angle control arms 25a is set such that the protrusion lengths thereof are short and a pair of adjacent angle control arms 25b is set such that the protrusion lengths thereof are long. Then, the light-receiving surface of the solar cell unit 20 faces the direction of the sun 1. When the sun 1 passes through the culmination as shown in Fig. 3 (b), the heights of the angle control arms 25a and 25b are set to be equal to each other. Then, the light-receiving surface of the solar cell unit 20 faces the direction of the sun 1. When the sun 1 is located in the west as shown in Fig. 3(c), the pair of adjacent angle control arms 25b is set such that the protrusion lengths thereof are short and the pair of adjacent angle control arms 25a is set such that the protrusion lengths thereof are long. Then, the light-receiving surface of the solar cell unit 20 faces the direction of the sun 1.
That is, the angle of the sunlight varies over the time with the rotation of the earth, when the sun is viewed from the earth. Therefore, the surface angle of the solar cell unit 20 needs to be varied in accordance with the angle of the sunlight in order to efficiently receive the sunlight. In this embodiment, accordingly, the plural angle control arms 25 are provided to independently elevate the four corners of the solar cell unit 20 and the angle control arms 25 are independently controlled to adjust the angle of the light-receiving surface. Thus, the solar cell unit 20 can efficiently receive the sunlight.

Fig. 4 is a diagram illustrating the solar cell unit which is stored in the solar cell raft mother vessel. In Fig. 4(a), for example, the solar cell raft mother vessel 4 is provided with an arm 34 fixing two rollers 35 and 36. A solar cell unit 20a is wound and stored in advance in the roller 35. Further, a solar cell unit 20b is being wound around the other roller 36 from the floating body main section 27 in an arrow direction. Further, before the solar cell unit 20 is wound, cables connecting the solar cell units 20 to each other are removed or the fixing tools 24 are removed from the solar cell unit 20 in advance.
A flexible type of solar cells 21 wound around the roller is preferable, as described above. At the present time, the flexible solar cell 21 with high endurance is commercially available. For example, a copper indium gallium diselenide (CIGS) solar cell can reliably be used for a long time. Accordingly, the plurality of flexible solar cells constituting the solar cell unit 20 are connected to each other in a strip shape, and thus the strip-shaped solar cell group can be wound and stored around the roller. Thus, the long strip-shaped solar cell groups can be stored simply without providing a place for the solar cell groups.
In Fig. 4(b), the plurality of solar cells 21 constituting the solar cell unit 20 are connected to each other in a plate shape to fold the solar cells 21 in a small-sized folding screen shape (plate-shaped solar cell group 37). That is, the solar cells with no flexibility are configured in a plate shape in a unit of the plurality of solar cells. The plate-shaped solar cells are connected to each other to form a plate-shaped solar cell group and to be stored by folding the plate-shaped solar cells at the boundaries thereof. Thus, since the solar cells can be used at lower cost compared to the flexible solar cells, the cost of the solar cell unit can be reduced.

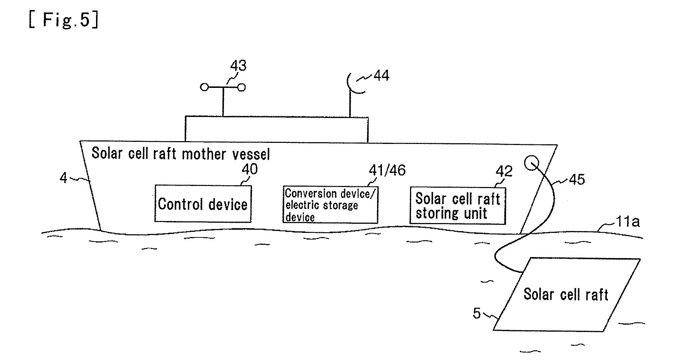

Fig. 5 is a diagram illustrating the configuration of the solar cell raft mother vessel according to the invention. The solar cell raft mother vessel 4 includes a control device 40 controlling the angle control arms 25, a conversion device 41 converting the energy generated by the solar cell unit 20 into hydrogen, and a solar cell raft storing unit 42 storing the solar cell raft 5 inside (outside). The power generated by the solar cell raft 5 is supplied to conversion device 41 through a cable 45. The solar cell raft mother vessel 4 further includes an antenna 44 receiving information from the weather satellite 2 and the GPS satellite 3 and supplies the information to the control device 40 and an anemometer 43 detecting a wind direction and a wind speed. A mother vessel storing and conveying only the solar cell raft 5 may be provided separately from the solar cell raft mother vessel 4. In this case, each solar cell raft mother vessel 4 includes the control device 40 and the conversion device 41, respectively. Although not illustrated in the drawing, it may be considered that the solar cell raft mother vessel 4 is equipped with a sail to minimize the energy necessary to sail the solar cell raft mother vessel 4 by wind power. Further, an electric storage device 46 directly storing the electric energy generated by the solar cell unit 20 may be mounted instead of the conversion device 41.
A nickel-hydrogen battery or a lithium-ion battery may be used as the electric storage device 46. In recent years, a new power storage device capable of easily inputting and outputting large power has been used as an electric double layer capacitor. The electric double layer capacitor is a "device which is capable of accumulating electricity" so as to use the generated electric energy simply, efficiently, and quickly without waste. The electric double layer capacitor has already been mounted and has been put to practical use on a bus in some foreign countries. In Japan, an effort has been made to put the electric double layer capacitor to practical use in a wide range of fields. For example, the electric double layer capacitor is mounted on a vehicle or a heavy machine or is used as a lighting power supply. In the future, the electric double layer capacitor is expected to be used singly or in combination along with a nickel-hydrogen battery or a lithium-ion battery or to be utilized in various industrial fields. Further, the electric double layer capacitor has the following features: 1) fast charge and discharge of large current is realized, 2) an efficiency of charge and discharge is good, 3) the electric double layer capacitor is durable for repetition charge and discharge and has a long lifetime, 4) the electric double layer capacitor has no harmful heavy metal and is environmentally friendly, and 5) breakdowns are small and an explosion danger is low.

Fig. 6 (a) is a functional block diagram illustrating the details of the control device described in Fig. 5, Fig. 6(b) is a functional block diagram illustrating the details of the conversion device described in Fig. 5, and Fig. 6(c) is a functional block diagram illustrating the details of the electric storage device described in Fig. 5.
In Fig. 6(a), the control unit 40 includes a communication unit 50 communicating with the weather satellite 2 and/or the GPS satellite 3; a weather information reception unit 53 receiving weather information transmitted from the weather satellite 2; a solar position calculation unit 54 calculating the position of the sun based on the weather information received by the weather information reception unit 53; a sail schedule calculation unit 61 calculating a long-term sail schedule based on the weather information received by the weather information reception unit 53; a GPS reception unit 51 receiving a signal from the GPS satellite 3; a vessel position calculation unit 52 calculating the vessel position of the solar cell raft mother vessel 4 based on the GPS information obtained by the GPS reception unit 51; a solar cell group angle control unit 56 controlling the angle control arms 25 based on the position of the sun calculated by the solar position calculation unit 54, the wind direction, the wind speed, and the sail schedule; the antenna 44 receiving information from the weather satellite 2 and the GPS satellite 3 and supplying the information to the control device 40; and the anemometer 43 detecting the wind direction and the wind speed.

In Fig. 6(b), the conversion device 41 includes a seawater electrolysis device 57 electrolyzing the seawater by the power generated by the solar cell unit 20, a hydrogen liquefying device 58 liquefying the hydrogen extracted by the seawater electrolysis device 57, and a liquefied hydrogen tank 59 storing the liquefied hydrogen. The conversion device 41 may further include a storage battery 60 storing the surplus power obtained from the solar cell raft 5 without conversion and may perform electrolysis using the electric energy stored in the storage battery 60 at the sudden weather change time or at night. Although not illustrated in the drawing, the conversion device 41 may further include a device converting seawater into methanol and storing the converted methanol, since methanol is in a liquid phase at normal temperatures and pressures and a heat insulation countermeasure is not necessary.
In Fig. 6(c), the electric storage device 46 includes a battery unit 63 storing the power and a charge/discharge device 62 charging the battery unit 63 with the power generated by the solar cell unit 20 and outputting the power from the battery unit 63. Further, the charge/discharge device 62 includes an output terminal 64 outputting the electric energy accumulated in the battery unit 63 to supply the electric energy to the storage battery tanker 13.
That is, the solar cell raft mother vessel 4 stands by near the solar cell raft 5 and is connected to the solar cell unit 20 via the cable 45. The solar cell raft mother vessel 4 electrolyzes the seawater using the power generated by the solar cell unit 20 to extract hydrogen. Further, the solar cell raft mother vessel 4 confirms the position of the sun 1 or the position of the solar cell raft mother vessel 4 based on the information from the weather satellite 2 and the GPS satellite 3, moves the solar cell raft 5 to the location for receiving the solar energy most efficiently by the sail schedule based on long-term weather prediction, and controls the angle of the light-receiving surface of the solar cell unit 20. Such control is carried out by a computer and the solar cell raft mother vessel 4 tracks the sun in real time and moves the solar cell raft 5 such that the solar cell unit 20 receives the sunlight as much as possible. In order to minimize the energy necessary in the movement, the solar cell raft mother vessel 4 detects the wind power and the wind direction and performs control such that the angle of the surface of the solar cell unit 20 is optimized for the movement direction. Thus, the solar energy can efficiently be converted into another type of energy and can be stored. Since the seawater include various kinds of materials, sodium, potassium, rare metal, and the like can be extracted as well as hydrogen by the electrolysis.
The electric energy generated by the solar cell unit 20 is directly stored in the electric storage device 46. Then, each storage battery tanker 13 recovers the electric energy, converts the electric energy into predetermined power, and uses the power. Thus, since it is not necessary to provide the conversion device 41 converting the electric energy, the electric energy can efficiently be stored. That is, the electric storage device 46 is provided instead of the conversion device 41. The electric storage device 46 includes the large-capacity battery unit 63 and the charge/discharge device 62 charging the battery unit 63 or outputting power. Thus, the solar energy can be stored more efficiently.

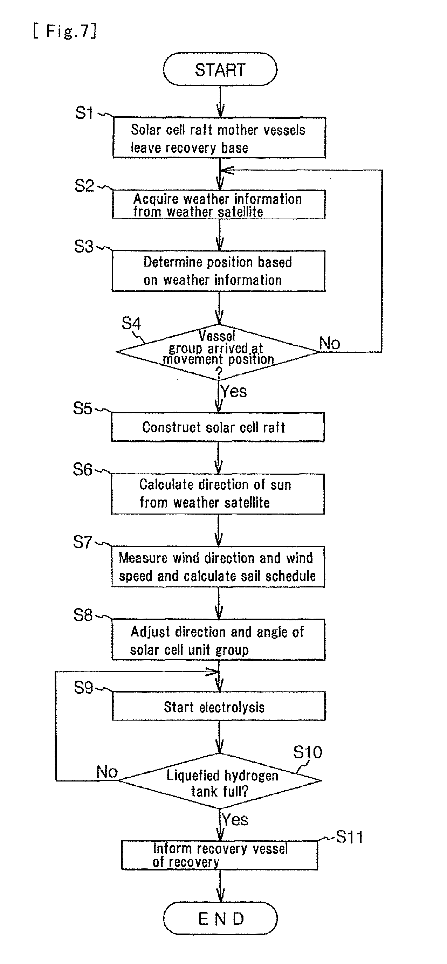

Fig. 7 is a flowchart illustrating an operation course of the solar cell raft mother vessel of the solar power generation system according to the invention. The vessel group of the solar cell raft mother vessels 4 moves from the recovery base 8 to a target sea area to convey the solar cell rafts 5 of which each solar cell raft mother vessel 4 is in charge (S1). When the solar cell raft mother vessels 4 convey the solar cell rafts 5, the solar cell raft mother vessels 4 acquire weather information regarding the weather conditions of the target sea area in advance from the weather satellite 2 (S2) and determine the position of the target sea area based on the acquired weather information (S3). The positions of each vessel group are controlled up to the target sea area based on the position information obtained from the GPS satellite 3. Each vessel group arrived in the target sea area (Y in step S4) puts the floating body 23 of the solar cell raft 5 from the solar raft mother vessels 4. For example, the floating body 23 is expanded by compressed air like a bladder with a hollow inside. Then, the solar cell unit 20 wound and stored by the roller is withdrawn and installed on the floating body 23 in this way. The solar cell units 20 are connected to each other by the cables and the entire surfaces of floating body 23 are paved with the solar cells (S5). When the respective solar cell rafts A, B, and C are complete, the solar cell raft mother vessel 4 calculates the azimuth of the sun based on the information from the weather satellite 2 (S6). Further, the solar cell raft mother vessel 4 calculates the sail schedule by measuring the wind direction and the wind speed (S7) and adjusts the angles of the solar cell surfaces so that the solar cell surfaces face the azimuth of the sun 1 (S8). Then, each solar cell raft 5 converts the solar energy into the electric energy and the seawater is electrolyzed using the power (S9) to extract hydrogen in the solar cell raft mother vessel 4. The extracted hydrogen is liquefied and stored in the tank. When the tank is full with the liquefied hydrogen (Y in step S10), the recovery vessel 6 is informed of recovery (S11).

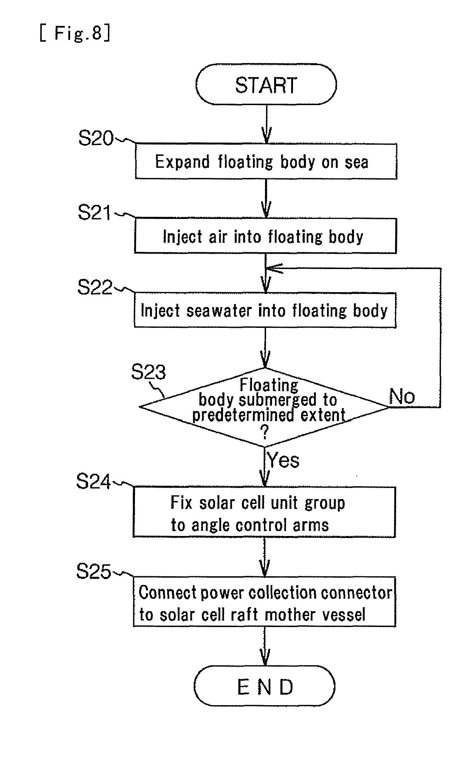

Fig. 8 is a flowchart illustrating a process of installing the floating body on the sea. When the solar cell raft mother vessel 4 arrives in the job spot, the solar cell raft mother vessel 4 expands the floating body 23 on the sea (S20). Next, pressurized air is injected into the floating body 23 so that the floating body 23 does not sink (S21). In this state, the seawater is injected into the semi-submerged tank 30 so that the floating body 23 floats from the sea surface to the predetermined extent (S22). The predetermined extent is adjusted so that the floating body main section 27 floats from the sea surface to a predetermined extent (S23). When the floating body 23 is stabilized, the solar cell units 20 are fixed to the angle control arms 25 by the fixing tools 24 (S24). Then, the power collection connector 29 is connected to the solar cell raft mother vessel 4 (S25).

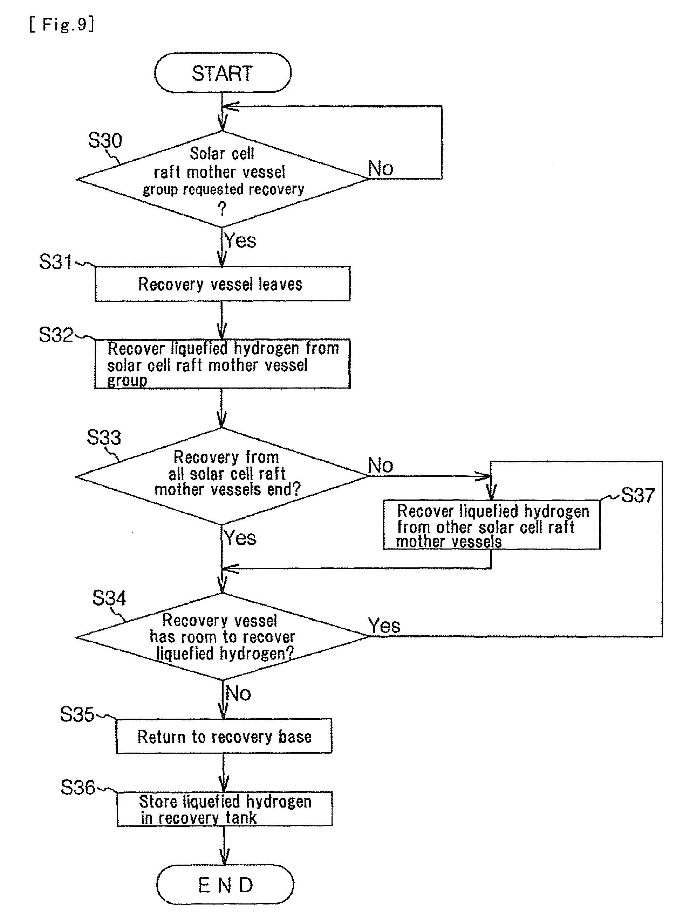

Fig. 9 is a flowchart illustrating an operation course of the recovery vessel of the solar power generation system according to the invention. At the recovery base 8, it is determined whether the solar cell raft mother vessel 4 requests the recovery (S30). When it is determined that the solar cell raft mother vessel 4 requests the recovery (Y in step S30), the recovery vessel 6 leaves the recovery base 8 (S31). When the recovery vessel 6 arrives at the job spot, the recovery vessel 6 recovers the liquefied hydrogen from the solar cell raft mother vessel 4 (S32). It is determined whether the recovery of the liquefied hydrogen from all the solar cell raft mother vessels 4 ends (S33). When the recovery of the liquefied hydrogen does not end (N in step S33), the liquefied hydrogen is recovered from the other solar cell raft mother vessels 4 (S37). However, since there is a limitation on the recovery capability of the recovery vessel 6, it is determined whether the recovery vessel 6 has an appropriate room to recover the liquefied hydrogen (S34). When it is determined that the recovery vessel 6 has no room to recover the liquefied hydrogen (N in step S34), the recovery vessel 6 stops recovering the liquefied hydrogen, returns to the recovery base 8 (S35), and then stores the liquefied hydrogen in the hydrogen recovery tank 9 of the recovery base 8 (S36).
When the solar power generation system is configured such that the sum area of the solar cell rafts 5 is, for example, 2 square kilometers, the above-described solar power generation system according to the invention corresponds to a power plant of 100 thousand kW on the assumption that the energy ratio of direct sunlight is 1 kW/m² and an electric conversion efficiency is 12% (underestimated value at the present time), and average generation hours are 10 hours/day. Further, if the sum area of the solar cell rafts 5 is expanded to 20 square kilometers, the solar power generation system corresponds to a nuclear power plant of 1 million kW.

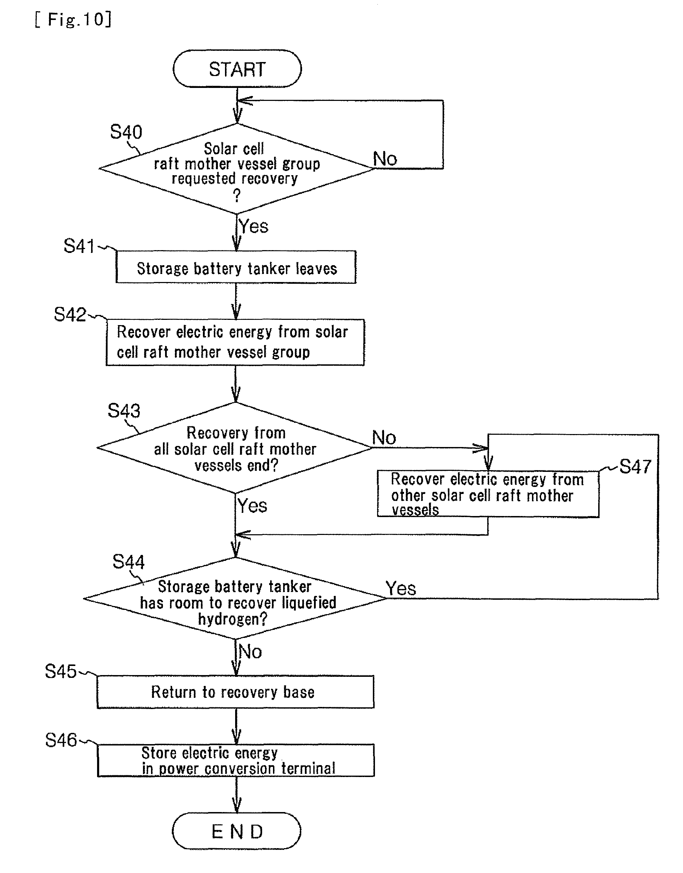

Fig. 10 is a flowchart illustrating an operation course of the storage battery tanker of the solar power generation system according to the invention. At the recovery base 8, it is determined whether the solar cell raft mother vessel 4 requests the recovery (S40). When it is determined that the solar cell raft mother vessel 4 requests the recovery (Y in step S40), the storage battery tanker 13 leaves the recovery base 8 (S41). When the storage battery tanker 13 arrives at the job spot, the storage battery tanker 13 recovers the electric energy from the solar cell raft mother vessel 4 (S42). It is determined whether the recovery of the electric energy from all the solar cell raft mother vessels 4 ends (S43). When the recovery of the electric energy does not end (N in step S43), the electric energy is recovered from the other solar cell raft mother vessels 4 (S47). However, since there is a limitation on the recovery capability of the storage battery tanker 13, it is determined whether the storage battery tanker 13 has an appropriate room to recover the electric energy (S44). When it is determined that the storage battery tanker 13 has no room to recover the electric energy (N in step S44), the storage battery tanker 13 stops recovering the electric energy, returns to the recovery base 8 (S45), and then stores the electric energy in a power conversion terminal 12 of the recovery base 8 (S46).

### EXPLANATIONS OF LETTERS OR NUMERALS

1: sun, 2: weather satellite, 3: GPS satellite, 4: solar cell raft mother vessel, 5: solar cell raft, 6: recovery vessel, 7: transport pipe, 8: recovery base, 9: hydrogen recovery tank, 10: power plant, 11: sea, 12: power conversion terminal, 13: storage battery tanker, 20: solar cell unit, 21: solar cell, 23: floating body, 24: fixing tools, 25: angle control arm, 27: floating body main section, 28: power collection wire, 29: power collection connector, 30: semi-submerged tank, 31: communication pipe, 32: seawater, 33: air, 34: arm, 35, 36: roll, 37: plate-shaped solar cell group, 38: pillar, 40: control device, 41: conversion device, 42: solar cell raft storing unit, 43: anemometer, 44: antenna, 45: cable, 46: electric storage device, 50: communication unit, 51: GPS reception unit, 52: vessel position calculation unit, 53: weather information reception unit, 54: solar position calculation unit, 55: control unit, 56: solar cell group angle control unit, 57: seawater electrolysis device, 58: hydrogen liquefying device, 59: liquefied hydrogen tank, 60: storage battery, 61: sail schedule calculation unit, 62: charge/discharge device, 63: battery unit, 64: output terminal, 100: solar power generation system

## Claims

1. A solar power generation system comprising:
a solar cell raft which floats on the sea and includes a floating body on which a solar cell unit is mounted, the solar cell unit being formed by connecting a plurality of solar cells in a sheet form;
a solar cell raft mother vessel which is equipped with an electricity-hydrogen conversion unit configured to convert electric energy generated by the solar cell unit into hydrogen and with a hydrogen storage unit configured to store the converted hydrogen, the solar cell raft mother vessel being capable of transporting the solar cell raft;
a recovery vessel which mounts a hydrogen recovery/storage unit configured to recover the hydrogen stored in the hydrogen storage unit;
a hydrogen recovery tank configured to recover the hydrogen from the recovery vessel and store the recovered hydrogen; and
an energy conversion unit configured to convert the hydrogen stored in the hydrogen recovery tank into electric energy or to directly use the hydrogen stored in the hydrogen recovery tank.

2. A solar power generation system comprising:
a solar cell raft which floats on the sea and includes a floating body on which a solar cell unit is mounted, the solar cell unit being formed by connecting a plurality of solar cells in a sheet form;
a solar cell raft mother vessel which is equipped with an electric storage unit configured to store electric energy generated by the solar cell unit and which is able to transport the solar cell raft;
a storage battery tanker which recovers the electric energy stored in the electric storage unit; and
a power conversion terminal which recovers the electric energy stored in the electric battery tanker and converts the electric energy into predetermined power.

3. The solar power generation system according to claim 1 or 2, wherein a solar cell raft group is constructed by connecting the solar cells and the floating bodies that constitute a plurality of the solar cell rafts, respectively.

4. The solar power generation system according to any one of claims 1 to 3, further comprising a plurality of elevating units mounted on the floating bodies and configured to independently lift and lower the solar cell units to appropriate positions, wherein a surface angle of the solar cell unit is changeable by independently controlling the respective elevating units.

5. The solar power generation system according to any one of claims 1 to 4, wherein the floating body includes a stretchable, foldable and hollow floating body main section which mounts the solar cell unit therein and a stretchable and hollow semi-submerged tank that submerges the floating body in the sea to stabilize the floating body and wherein a specific weight of the semi-submerged tank is set such that the floating body main section floats from the sea surface to a predetermined extent.

6. The solar power generation system according to any one of claims 1 to 5, wherein the plurality of solar cells of the solar cell unit are configured to be connected to each other in a strip shape and be wound around a roller.

7. The solar power generation system according to any one of claims 1 to 5, wherein the plurality of solar cells of the solar cell unit are configured to be connected to each other in a plate shape and be folded in a folding screen shape.

8. The solar power generation system according to any one of claims 1 to 7,
wherein the solar cell raft mother vessel includes a control device configured to control the elevating unit, a conversion device configured to convert energy generated by the solar cell unit, and a reception unit configured to receive the solar cell raft,
wherein the control device includes
a communication unit configured to communicate with a weather satellite and/or a GPS satellite,
a weather information reception unit configured to receive weather information transmitted from the weather satellite,
a GPS reception unit configured to acquire position information, which is acquired based on a signal from the GPS satellite with regard to the solar cell raft mother vessel,
a solar position calculation unit configured to calculate a position of the sun based on the weather information received by the weather information receiving unit,
a sail schedule calculation unit configured to calculate a long-term sail schedule based on the weather information received by the weather information receiving unit, and
a solar cell angle control unit configured to control the elevating unit based on the position of the sun calculated by the solar position calculation unit, a wind direction, a wind speed, and the sail schedule, and
wherein the conversion device includes
a seawater electrolysis device configured to electrolyze seawater by power generated by the solar cell unit,
a hydrogen liquefying device configured to liquefy the hydrogen extracted by the seawater electrolysis device, and
a liquefied hydrogen tank configured to store the liquefied hydrogen.

9. The solar power generation system according to any one of claims 1 to 7,
wherein the solar cell raft mother vessel includes a control device configured to control the elevating unit, an electric storage device configured to store energy generated by the solar cell unit, and a storing unit configured to store the solar cell raft,
wherein the control device includes
a communication unit configured to communicate with a weather satellite and/or a GPS satellite,
a weather information reception unit configured to receive weather information transmitted from the weather satellite,
a GPS reception unit configured to acquire position information regarding the solar cell raft mother vessel, the position information being acquired based on a signal from the GPS satellite,
a solar position calculation unit configured to calculate a position of the sun based on the weather information received by the weather information receiving unit,
a sail schedule calculation unit configured to calculate a long-term sail schedule based on the weather information received by the weather information receiving unit, and
a solar cell angle control unit configured to control the elevating unit based on the position of the sun calculated by the solar position calculation unit, a wind direction, a wind speed, and the sail schedule, and
wherein the electric storage device includes
a battery unit configured to store the power, and
a charge/discharge device configured to charge the battery unit with the power generated by the solar cell unit and to discharge the power from the battery unit.

10. The solar power generation system according to any one of claims 1 to 9,
wherein the solar cell unit is used as a sail that serves to move the solar cell raft mother vessel by wind power.
